# EUROPEAN PATENT APPLICATION

(11) **EP 4 621 930 A1**
(43) Date of publication of application: **24.09.2025**
(21) Application number: 23907806.6
(22) Date of filing: 21.12.2023
(51) Int. Cl.: H01M 10/44, H01M 4/04, H01M 4/505, H01M 4/525, H01M 4/02

(54) **METHOD FOR MANUFACTURING LITHIUM SECONDARY BATTERY**

(30) Priority: 23.12.2022 KR 20220183739; 20.12.2023 KR 20230187697
(71) Applicant: LG Energy Solution, Ltd., Seoul 07335 (KR)
(72) Inventor: JO, Youngseong, Daejeon 34122 (KR); KANG, Hyeyeon, Daejeon 34122 (KR); KANG, Bohyun, Daejeon 34122 (KR); JANG, Daeun, Daejeon 34122 (KR); SUNG, Kiwon, Daejeon 34122 (KR); PARK, Jinseo, Daejeon 34122 (KR)
(74) Representative: Hoffmann Eitle
(86) International application number: PCT/KR2023/021256
(87) International publication number: WO 2024/136523

(57) **Abstract**

The present disclosure relates to a method for manufacturing a lithium secondary battery, the method comprising the steps of: preparing a battery cell including a positive electrode, a negative electrode and an electrolyte, with the positive electrode including lithium-rich manganese-based oxide in which the content of manganese in all metals excluding lithium is greater than 50 mol%, and a ratio of the number of moles of lithium to the number of moles of all metals excluding lithium (Li/Me) is greater than 1; and charging and discharging the battery cell at least once or more to activate the battery, wherein the battery cell has a ratio (N/P ratio) of a discharge capacity per unit area of the negative electrode to a discharge capacity per unit area of the positive electrode of 1.05 to 1.15, when charging at 2.0V to 4.3V, and wherein charging in the activating step is performed from SOC 60 to SOC 65.

## Description

### [TECHNICAL FIELD]

### Cross Citation with Related Application(s)

This application claims the benefit of Korean Patent Application No. 10-2022-0183739 filed on December 23, 2022 and Korean Patent Application No. 10-2023-0187697 filed on December 23, 2022 with the Korean Intellectual Property Office, the disclosure of which is incorporated herein by reference in its entirety.

The present disclosure relates to a method for manufacturing a lithium secondary battery, and more specifically, to a method for manufacturing a lithium secondary battery comprising lithium-rich manganese-based oxide, which can appropriately control the activation voltage conditions and improve excessive design of a negative electrode.

### [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxide having a layered structure and having a molar ratio of lithium to transition metal of greater than 1 have been developed. Such a lithium-rich transition metal oxide can achieve high capacity by performing the activation step at a high voltage of 4.4V or more.

On the other hand, because the lithium-rich transition metal oxides have high initial irreversibility, a negative electrode design with a higher operating capacity than the actual operating capacity is required so as to accommodate high positive electrode capacity in the high-voltage activation process and prevent lithium precipitation. However, if the negative electrode is excessively designed in this way, there is a problem that the volume and weight of the secondary battery increases.

Therefore, in order to achieve miniaturization and light weighting of lithium secondary batteries used as power supply devices such as electric vehicles, portable electronic devices, etc., there is a high need to develop a new technology that can address the increase in volume and weight of lithium secondary batteries.

### [Prior Art Literature]

### [Patent Literature]

Japanese Unexamined Patent Publication No. 2017-130557

### [DETAILED DESCRIPTION OF THE INVENTION]

### [Technical Problem]

Therefore, the present disclosure has been designed to solve the above-mentioned problems, and an object of the present disclosure is to provide a method for manufacturing a lithium secondary battery comprising lithium-rich manganese-based oxide, which can appropriately control the activation voltage conditions and improve excessive design of a negative electrode.

### [Technical Solution]

According to one aspect of the present disclosure, there is provided a method for manufacturing a lithium secondary battery, the method comprising the steps of: preparing a battery cell including a positive electrode, a negative electrode and an electrolyte, wherein the positive electrode includes a lithium-rich manganese-based oxide having a content of manganese greater than 50 mol% compared to a total content of metals excluding lithium in the lithium-rich manganese-based oxide, and a ratio of a number of moles of lithium to a number of moles of all metals excluding lithium (Li/Me) is greater than 1; and charging and discharging the battery cell at least once to activate the battery,
wherein the battery cell has a ratio (N/P ratio) of a discharge capacity per unit area of the negative electrode to a discharge capacity per unit area of the positive electrode of 1.05 to 1.15, when charging at from 2.0V to 4.3V, and
wherein in the activating step, the charging is performed from SOC 60 to SOC 65.

The lithium-rich manganese-based oxide may be represented by the following Chemical Formula 1.

[Chemical Formula 1] LiₐNi_{b}Co_{c}Mn_{d}MₑO₂

wherein, in Chemical Formula 1, 1 < a, 0≤b≤0.5, 0≤c≤0.1, 0.5≤d<1.0, 0≤e≤0.2, and M is at least one selected from the group consisting of Al, B, Co, W, Mg, V, Ti, Zn, Ga, In, Ru, Nb, Sn, Sr and Zr.

The charging step may be performed from SOC 60 to SOC 65 at a rate of 0.3C to 1.0C.

The charging step may include a first charging step of charging at a rate of 0.1C to 0.3C in the range of SOC 0 ~ SOC 5, and a second charging step of charging from SOC 60 to SOC 65 at a rate of 0.3C to 1.0 C after the first charging step.

The charging step may be performed in constant current mode (CC mode) or constant current-constant voltage mode (CCCV mode).

The activating step may include discharging at a C-rate of 0.3C to 0.7C until reaching 2.0V.

### [DETAILED DESCRIPTION OF THE EMBODIMENTS]

Terms or words used in the specification and the appended claims should not be construed as limited to ordinary or dictionary meanings, and the present invention should be construed with meanings and concepts that are consistent with the technical idea of the present invention based on the principle that the inventors may appropriately define concepts of the terms to appropriately describe their own invention in the best way.

In the present invention, 'primary particle' refers to a particle unit in which grain boundaries do not appear to exist when observed with the field of view of 5000 to 20000 magnification using a scanning electron microscope. "Average particle size of primary particles" refers to the arithmetic average value of primary particles observed in a scanning electron microscope image calculated after measuring their particle sizes.

In the present invention, 'secondary particle' is a particle formed by agglomerating a plurality of primary particles.

In the present invention, the average particle size D₅₀ means a particle size at which cumulative volumes of powder particles (e.g., positive electrode active material, negative electrode active material, etc.) reach 50% in the particle size distribution curve of the particles. The D₅₀ can be measured using a laser diffraction method. It can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution, and determining the particle size corresponding to 50% of cumulative volume.

Further, in the present invention, "SOC X" refers to a state where the percentage of the capacity charged in the battery cell based on the discharge capacity appearing when the battery cell is discharged from 4.6 V to 2.0 V is X.

The present inventors have conducted repeated research to improve the problem of increasing the volume and weight of a lithium secondary battery using lithium-rich manganese-based oxide, and as a result, found that an activating step is performed under specific charging conditions when manufacturing a lithium secondary battery, thereby making it possible to set the negative electrode loading amount to the amount required for the actual driving voltage and thus solve the problem of increasing the volume and weight of the lithium secondary battery, and completed the present invention.

Now, a method for manufacturing a lithium secondary battery according to the present invention will be described.

A method for manufacturing a lithium secondary battery according to the present invention includes a step of preparing a battery cell including a positive electrode, a negative electrode and an electrolyte, wherein the positive electrode includes a lithium-rich manganese-based oxide having a content of manganese greater than 50 mol% compared to a total content of metals excluding lithium in the lithium-rich manganese-based oxide, and a ratio of a number of moles of lithium to a number of moles of all metals excluding lithium (Li/Me) is greater than 1; and
a step of charging and discharging the battery cell at least once or more to activate the battery,
wherein the battery cell has a ratio (N/P ratio) of a discharge capacity per unit area of the negative electrode to a discharge capacity per unit area of the positive electrode of 1.05 to 1.15, when charging at 2.0V to 4.3V, and
wherein in the activating step, the charging is performed from SOC 60 to SOC 65.

### (1) Step of preparing battery cell

First, a battery cell including a positive electrode, a negative electrode, and an electrolyte is prepared.

The battery cell can be prepared, for example, by forming an electrode assembly including a positive electrode and a negative electrode, housing the electrode assembly in a battery case, and then injecting an electrolyte to seal a battery case. At this time, the electrode assembly may include a separator between the positive electrode and the negative electrode.

Each component of the battery cell according to the present invention will be described in more detail below.

### Positive electrode

The positive electrode according to the present invention includes lithium-rich manganese-based oxide in which the content of manganese in all metals excluding lithium is greater than 50 mol%, and the ratio of the number of moles of lithium to the number of moles of all metals excluding lithium (Li/Me) is greater than 1. Specifically, the positive electrode according to the present invention includes a positive electrode current collector, and a positive electrode active material layer formed on at least one surface of the positive electrode current collector, wherein the positive electrode active material layer includes a lithium-rich manganese-based oxide in which the ratio of the number of moles of lithium to the number of moles of all metals excluding lithium (Li/Me) is greater than 1.

In the case of lithium-rich manganese-based oxide containing surplus lithium, it has a structure of layered phase (LiM'O₂) and rock-salt phase (Li₂MnO₃) are mixed. During the initial activation process, the rock-salt phase is activated and excessive lithium ions are generated, thereby achieving high capacity.

Preferably, the lithium-rich manganese-based oxide may be represented by the following Chemical Formula 1.

[Chemical Formula 1] LiₐNi_{b}Co_{c}Mn_{d}MₑO₂

wherein, in Chemical Formula 1, 1 < a, 0≤b≤0.5, 0≤c≤0.1, 0.5≤d<1.0, 0≤e≤0, and M is at least one selected from the group consisting of Al, B, Co, W, Mg, V, Ti, Zn, Ga, In, Ru, Nb, Sn, Sr and Zr.

On the other hand, the a is the molar ratio of Li in the lithium-rich manganese-based oxide, and may be 1<a, 1.1≤a≤1.5, or 1.1≤a≤1.3.

The b is the molar ratio of Ni in the lithium-rich manganese-based oxide, and may be 0≤b≤0.5, 0.1≤b≤0.4 or 0.2≤b≤0.4.

The c is the molar ratio of Co in the lithium-rich manganese-based oxide, and may be 0≤c≤0.1, 0≤c≤0.08, or 0≤c≤0.05. If c exceeds 0.1, it is difficult to secure high capacity, and gas generation and deterioration of the positive electrode active material become intensified, and the life characteristics may deteriorate.

The d is the molar ratio of Mn in the lithium-rich manganese-based oxide, and may be 0.5≤d<1.0, 0.50≤d≤0.80, or 0.50≤d≤0.70. If d is less than 0.5, the proportion of the rock-salt phase becomes too small, and thus the effects of capacity improvement are slight.

The e is the molar ratio of the doping element M in the lithium-rich manganese-based oxide, and may be 0≤e≤0.2, 0≤e≤0.1 or 0≤e≤0.05. If the content of the doping element is too high, it may have an adverse effect on the capacity of the active material.

On the other hand, in the lithium-rich manganese-based oxide represented by [Chemical Formula 1], the ratio (Li/Me) of the number of moles of Li to the number of moles of all metal elements excluding Li may be 1.2 ~ 1.5, 1.25 ~ 1.5, or 1.25 ~ 1.4. When the Li/Me ratio satisfies the above range, rate characteristics and capacity characteristics can excellently exhibit. If the Li/Me ratio is too high, electrical conductivity may decrease, and the rock-salt phase (Li₂MnO₃) may increase, which may increase the degradation rate. If the Li/Me ratio is too low, the effect of improving energy density is slight.

On the other hand, the composition of the lithium-rich manganese-based oxide may be represented by the following [Chemical Formula 2].

[Chemical Formula 2] X Li₂MnO₃·(1-X)Li[Ni_{1-y-z-w}Mn_{y}Co_{z}M_{w}]O₂

wherein, in [Chemical Formula 2], M may be at least one metal ion selected from the group consisting of Al, B, Co, W, Mg, V, Ti, Zn, Ga, In, Ru, Nb, Sn, Sr and Zr.

The X refers to the ratio of the Li₂MnO₃ phase in the lithium-rich manganese-based oxide, and may be 0.2≤X≤0.5, 0.25≤X≤0.5, or 0.25≤X≤0.4. When the ratio of the Li₂MnO₃ phase in the lithium-rich manganese-based oxide satisfies the above range, high capacity characteristics can be realized.

The y is the molar ratio of Mn in the LiM'O₂ layer, and may be 0.4≤y<1, 0.4≤y≤0.8, or 0.4≤y≤0.7.

The z is the molar ratio of Co in the LiM'O₂ layer, and may be 0≤z≤0.1, 0≤z≤0.08, or 0≤z≤0.05. If z is greater than 0.1, gas generation and deterioration of the positive electrode active material may become intensified, and the life characteristics may deteriorate.

The w is the molar ratio of the doping element M in the LiM'O₂ layer, and may be 0≤w≤0.2, 0≤w≤0.1, or 0≤w≤0.05.

On the other hand, the positive electrode active material according to the present invention may further include a coating layer on the surface of the lithium-rich manganese-based oxide, if necessary. When the positive electrode active material includes a coating layer, contact between the lithium-rich manganese-based oxide and the electrolyte is suppressed by the coating layer, and side reactions of the electrolyte are reduced, thereby capable of obtaining the effect of improving life characteristics

The coating layer may include a coating element M¹, and the coating element M¹ may be, for example, at least one selected from the group consisting of Al, B, Co, W, Mg, V, Ti, Zn, Ga, In, Ru, Nb, Sn, Sr and Zr, preferably, Al, Co, Nb, W, and a combination thereof, and more preferably, Al, Co, and a combination thereof. The coating element M¹ may include two or more types, for example, Al and Co.

The coating element may be present in the coating layer, in oxide form, i.e., M¹Oz (1≤z≤4).

The coating layer can be formed through methods such as dry coating, wet coating, chemical vapor deposition(CVD), physical vapor deposition(PVD), and atomic layer deposition(ALD). Among these, it is preferable to form it through atomic layer deposition in that the coating layer can be formed to have a wider area.

The formation area of the coating layer may be 10 to 100%, preferably 30 to 100%, and more preferably 50 to 100%, based on the total surface area of the lithium-rich manganese-based oxide particles When the formation area of the coating layer satisfies the above range, the effect of improving life characteristics is excellent.

On the other hand, the positive electrode active material according to the present invention may be in the form of secondary particles in which a plurality of primary particles are agglomerated, and the average particle size D₅₀ of the secondary particles may be 2 µm to 10 µm, preferably 2 µm to 8 µm, and more preferably 4 µm to 8 µm. When the D₅₀ of the positive electrode active material satisfies the above range, the electrode density can be excellently achieved, and degradation of capacity and rate characteristics can be minimized.

Further, the positive electrode active material may have a BET specific surface area of 1m²/g ~ 10m²/g, 3 ~ 8m²/g or 4 ~ 6m²/g. If the BET specific surface area of the positive electrode active material is too low, the reaction area with the electrolyte is insufficient, which makes it difficult to achieve sufficient capacity. If the specific surface area is too high, moisture absorption is rapid and side reactions with electrolytes are accelerated, which makes it difficult to secure life characteristics.

On the other hand, the lithium-rich manganese-based oxide can be produced by mixing a transition metal precursor and a lithium raw material and then firing the mixture.

As the lithium raw material, for example, lithium-containing carbonates (e.g., lithium carbonate, etc.), hydrates (e.g., lithium hydroxide hydrate(LiOH·H₂O), etc.), hydroxides (e.g., lithium hydroxide, etc.), nitrates (e.g., lithium nitrate(LiNO₃), etc.), chlorides (e.g., lithium chloride(LiCl), etc.), and the like can be used, and among these, one type alone or a mixture of two or more types can be used.

On the other hand, the transition metal precursor may be in the form of hydroxides, oxides, or carbonates. When the carbonate form of the precursor is used, it is more preferable in that a positive electrode active material with a relatively high specific surface area can be produced.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and proceeding with a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄ MnCO₃, Mn(NO₃)₂, MnSO₄·H₂O, manganese acetate, manganese halide, and the like.

The ammonium cation complex forming agent may be at least one selected from the group consisting of NH₄OH, (NH₄)₂SO₄, NH₄NO₃, NH₄Cl, CH₃COONH₄, and NH₄CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, a hydroxide form of the precursor can be obtained, and when Na₂CO₃ is used as a basic compound, a carbonate form of the precursor can be obtained. Further, when a basic compound and an oxidizing agent are used together, an oxide form of the precursor can be obtained.

On the other hand, the transition metal precursor and the lithium raw material can be mixed in an amount such that the molar ratio of total transition metals (Ni+Co+Mn):Li is 1:1.05 ~ 1:2, preferably 1:1.1 ~ 1:1.8, and more preferably 1:1.25 ~ 1:1.8.

On the other hand, the firing may be performed at a temperature of 600°C to 1000°C or 700°C to 950°C, and the firing time may be 5 hours to 30 hours or 5 hours to 20 hours. Further, the firing atmosphere may be an air atmosphere or an oxygen atmosphere, for example, an atmosphere containing oxygen at 20 to 100% by volume.

On the other hand, the positive electrode active material layer may further include a conductive material and a binder in addition to the positive electrode active material.

Examples of the conductive material include spherical or flaky graphite; carbon-based material such as carbon black, acetylene black, ketjen black, channel black, furnace black, lamp black, thermal black, carbon fiber, single-wall carbon nanotubes, and multi-wall carbon nanotubes; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like. Among these, one type alone or a mixture of two or more types can be used. The conductive material can be contained in an amount of 0.1 ~ 20% by weight, 1 ~ 20% by weight, or 1 ~ 10% by weight based on the total weight of the positive electrode active material layer.

Further, the binder is a component that assists in the attachment between the positive electrode active materials and in the adhesive force between the positive electrode active material and the current collector, and examples thereof include a fluororesin binder including polyvinylidene fluoride(PVDF) or polytetrafluoroethylene(PTFE); a rubber-based binder including styrene-butadiene rubber (SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binders including polyethylene and polypropylene; a polyimide-based binder; a polyester-based binder; a silane-based binder, and the like. The binder may be contained in an amount of 1 ~ 20% by weight, 2 ~ 20% by weight, or 2 ~ 10% by weight based on the total weight of the positive electrode active material layer.

### Negative electrode

The negative electrode may include, for example, a negative electrode current collector and a negative electrode active material layer located on the negative electrode current collector. The negative electrode active material layer may optionally include a binder and a conductive material along with the negative electrode active material.

The negative electrode current collector is not particularly limited as long as it has high conductivity without causing a chemical change in the battery, and, for example, copper, stainless steel, aluminum, nickel, titanium, fired carbon, or copper or stainless steel of which surface is treated with carbon, nickel, titanium, silver, or the like, an aluminum-cadmium alloy, or the like can be used. Further, the negative electrode current collector may generally have a thickness of 3 µm to 500 µm. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

As the negative electrode active material, a compound capable of reversible intercalation and deintercalation of lithium can be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiO_{β} (0<β< 2), SnO₂, vanadium oxide, and lithium vanadium oxide; a composite containing the metallic compound and the carbonaceous material, such as Si-C composite or Sn-C composite, and any one alone or a mixture of two or more thereof can be used.

Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, carbon fiber, and carbon nanotube; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one type alone or a mixture of two or more types of them can be used. The conductive material may typically be contained in an amount of 1 to 30% by weight, preferably 1 to 20% by weight, and more preferably 1 to 10% by weight, based on the total weight of the negative electrode active material layer.

The binder performs the role of improving adhesion between negative electrode active material particles and an adhesive force between the negative electrode active material and the negative electrode current collector. Specific examples thereof include a fluororesin binder including polyvinylidene fluoride(PVDF) or polytetrafluoroethylene(PTFE); a rubber-based binder including styrene-butadiene rubber(SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binders including polyethylene and polypropylene; a polyimide-based binder; a polyester-based binder; a silane-based binder, and the like, and any one type alone or a mixture of two or more types of them can be used. The binder may be contained in an amount of 1 to 30% by weight, preferably 1 to 20% by weight, and more preferably 1 to 10% by weight, based on the total weight of the negative electrode active material layer.

The negative electrode active material layer may be prepared by coating a negative electrode slurry containing a negative electrode active material and optionally a binder and a conductive material onto a negative electrode current collector, and drying the coated slurry, or may be prepared by casting the negative electrode slurry on a separate support and then laminating a film peeled from the support on the current collector.

Meanwhile, the battery cell of the present invention may have a ratio (N/P ratio) of a discharge capacity per unit area of the negative electrode to a discharge capacity per unit area of the positive electrode of 1.05 to 1.15, when charging at 2.0V to 4.3V. When the ratio (N/P ratio) of a discharge capacity per unit area of the negative electrode to a discharge capacity per unit area of the positive electrode is within the above range, a negative electrode capacity that can accommodate the high positive electrode capacity expressed in the activation stage can be secured, and thus, the stability of the secondary battery can be ensured.

### Separator

The lithium secondary battery according to the present invention may further include a separator interposed between the positive electrode and the negative electrode. The separator separates the negative electrode and the positive electrode from each other, and provides a moving passage for lithium ions. The separator can be used without particular limitation as long as it is used as a separator in a typical lithium secondary battery. Particularly, it is preferable that the separator has a low resistance against the ion migration of the electrolyte and has an excellent ability to impregnate the electrolyte. Specifically, the separator may be a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof. Further, a typical porous nonwoven fabric, for example, a nonwoven fabric made of a glass fiber having a high melting point, a polyethylene terephthalate fiber or the like can be used. In addition, in order to secure heat resistance or mechanical strength, a coated separator containing a ceramic ingredient or a polymer material can be used, and may be optionally used as a single layer or multilayer structure.

### Electrolyte

The electrolyte used herein may include various electrolytes that can be used in lithium secondary batteries, such as an organic liquid electrolyte, an inorganic liquid electrolyte, a solid polymer electrolyte, a gel-type polymer electrolyte, a solid inorganic electrolyte, a melt-type inorganic electrolyte, or a combination thereof, and the type thereof is not particularly limited.

For example, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate(DMC), diethyl carbonate(DEC), methylethylcarbonate(MEC), ethylmethyl carbonate(EMC), ethylene carbonate(EC), or propylene carbonate(PC); an alcohol-based solvent such as ethyl alcohol or isopropyl alcohol; nitriles such as R-CN (wherein R is a linear, branched or cyclic hydrocarbon group having 2 to 20 carbon atoms, and may include a double bond aromatic ring or ether bond); amides such as dimethylformamide; dioxolanes such as 1,3-dioxolane; sulfolane; or the like.

The lithium salt can be used without any particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt that can be used herein may be LiPF₆, LiN(FSO₂)₂, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂ or the like. The concentration of the lithium salt may be preferably used within the range of 0.1 to 5.0M.

In order to improve the life characteristics of the battery, suppress the decrease of the battery capacity, improve the discharging capacity of the battery, etc., the electrolyte may further include an additive, in addition to the above electrolyte ingredients. For example, as the additive, a haloalkylene carbonate-based compound such as difluoro ethylene carbonate; pyridine; triethylphosphite; triethanolamine; cyclic ether; ethylene diamine; n-glyme; hexaphosphoric triamide; nitrobenzene derivatives; sulfur; quinone imine dyes; N-substituted oxazolidinones; N,N-substituted imidazolidine; ethylene glycol dialkyl ether; ammonium salt; pyrrole; 2-methoxy ethanol; aluminum trichloride; or the like can be used alone or in combination, but are not limited thereto. The additive may be contained in an amount of 0.1 to 10% by weight, preferably 0.1 to 5% by weight, based on the total weight of the electrolyte.

On the other hand, the electrode assembly may be various forms of electrode assemblies well known in the art, for example, a jelly-roll type, a stacked type, a stacked and laminated type, or a stack and folding type electrode assembly, and the form thereof is not particularly limited.

The jelly-roll type electrode assembly can be produced by interposing a sheet-shaped separator between a sheet-shaped positive electrode and a sheet-shaped negative electrode and then winding it in one direction.

The stacked type electrode assembly can be produced by cutting a positive electrode, a separator and a negative electrode into a desired shape and then sequentially stacking the cut positive electrode/separator/ negative electrode.

The stacked and laminated type electrode assembly can be produced by a method of stacking a positive electrode, a separator and a negative electrode to produce a plurality of unit cells, stacking the plurality of unit cells with a separator interposed therebetween, and then laminating them through a method such as heating.

The stack and folding type electrode assembly can be produced by a method of stacking a positive electrode, a separator and a negative electrode to produce a plurality of unit cells, arranging the plurality of unit cells on one surface or both side surfaces of a long folding separator and then winding the folding separator.

On the other hand, as the battery case, various battery cases known in the art, for example, a cylindrical battery case, a prismatic battery case, or a pouch-type battery case, and the like can be used, and the type thereof is not particularly limited.

### (2) Activating step

Next, a step of charging and discharging the battery cell at least once or more to electrically activate the battery is performed. The activating step is a step of charging and discharging the battery cell to impart electrical properties and forming a SEI (Solid Electrolyte Interphase) film on the electrodes to stabilize the battery.

In the present invention, in the step of preparing a battery cell, an activating step of controlling a ratio (N/P ratio) of a discharge capacity per unit area of the negative electrode to a discharge capacity per unit area of the positive electrode to 1.05 to 1.15 and charging the battery cell rom SOC 60 to SOC 65 is performed, thereby making it possible to set the amount of negative electrode loading required for actual operation, and solving the problem of increasing the volume and weight of the secondary battery due to unnecessary use of the negative electrode.

More specifically, it is more desirable to control the ratio (N/P ratio) of a discharge capacity per unit area of the negative electrode to a discharge capacity per unit area of the positive electrode to 1.05 to 1.10, and within this range, it is possible to prevent excessive design of the negative electrode while maximizing the capacity of the positive electrode.

The charging step may be performed from SOC 60 to SOC 65 at a rate of 0.3C to 1.0C, and specifically, the charging step may include a first charging step of charging the battery cell to SOC 5 or less, and a second charging step of charging the battery cell from SOC 60 to SOC 65 at a rate of 0.3C to 1.0 C after the first charging step.

Specifically, the first charging step may be performed at a C-rate of 0.3C or less, preferably 0.1C to 0.3C in the range of SOC 0 ~ SOC 5.

When the charge capacity satisfies the above range in the first charging step, a robust and dense SEI film is formed on the electrode surface, thereby realizing excellent life characteristics.

Further, if the current rate in the first charging stage is faster than 0.3C, the SEI film may be unstably formed on the electrode surface. If the SEI film is unstably formed on the electrode surface, the SEI film is easily decomposed during battery operation, causing rapid deterioration of the electrode, which can significantly reduce life characteristics.

On the other hand, the first charging step may be performed in constant current mode (CC mode).

Next, the activating step may include a second charging step of charging from SOC 60 to SOC 65 from the point of time when the first charging step is completed.

Specifically, the charging step may be performed from SOC 60 to SOC 65 at a C-rate of 0.3C to 1.0C.

If the charging capacity in the second charging stage satisfies the above range, it is possible to suppress the expression of an activation capacity that is excessively high compared to the driving capacity, and to obtain an actual driving charge/discharge capacity at the same level as the activation charge/discharge capacity, so that excessive design of the negative electrode required to perform the activation process is no longer required.

Meanwhile, if the second charging step is performed to a SOC of less than 60, Li₂MnO₃ is not activated at all, and so the characteristics of a battery using lithium-rich manganese-based oxide, which attempts to achieve high capacity through the Li₂MnO₃ activation reaction, cannot be realized. In addition, if the second charging step is performed to a range exceeding SOC 65, the excessively high positive electrode capacity is expressed compared to the design standard positive electrode driving capacity, and so the difference between the design standard N/P ratio and the driving voltage standard N/P ratio increases, which causes a problem that a thicker negative electrode design is required compared to the actually required negative electrode.

Meanwhile, the second charging step may be performed in constant current mode (CC mode) or constant current-constant voltage mode (CCCV mode).

When the second charging step is performed in constant current-constant voltage mode (CCCV mode), CC charging is performed while supplying C-rate of 0.3C to 1.0C from SOC60 to SOC65, and when reaching SOC 60 ~ SOC 65, CV charging can be performed in which the charging C-rate is sequentially reduced to about 0.05C.

Next, the activation step discharges the battery-cell charged through the first charging step and the second charging step. At this time, the discharge may be performed at a C-rate of 0.3C to 0.7C When the discharge rate satisfies the above range, the activation time can be appropriately controlled and discharge capacity characteristics within a desired range can be achieved.

On the other hand, the discharge may be performed in constant current mode (CC mode).

On the other hand, the discharge termination voltage may be 2.0 V to 3.0 V, specifically 2.0 V.

On the other hand, the activation step is preferably performed under temperature conditions of 25°C to 70°C, more preferably 40°C to 50°C. When the activation step is performed in the above temperature range, the effect of realizing high capacity can be obtained through appropriate activation of Li₂MnO₃.

Further, the activation step may be performed under pressurized conditions, if necessary. The pressurization can be performed by mounting the battery-cell to a jig and then applying pressure to the battery-cell via the jig. When the activation step is performed under pressurized conditions, it has the advantage that gas generated during the activation step can be easily discharged.

On the other hand, although this is not essentially required, the activating step may further include an aging step, if necessary. The aging step allows the electrolyte to be uniformly impregnated into the electrode assembly and stabilizes the battery, and may be performed before charging, during charging, and/or after discharging, and may be performed one or more times.

The aging step may be performed at a temperature of, for example, 20°C to 60°C, 20°C to 50°C, and preferably 30°C to 50°C. When the aging is performed at the above temperature, electrolyte impregnability and lithium mobility are improved so that activation can be performed more smoothly.

Hereinafter, the present invention will be described in more detail with reference to specific examples.

### Example 1

### (Manufacture of battery cells)

A positive electrode active material: a conductive material: a PVDF binder were mixed at a weight ratio of 97 : 1 : 2 in N-methylpyrrolidone to prepare a positive electrode slurry. At this time, Li_{1.16}Ni_{0.31}Mn_{0.53}O₂ was used as the positive electrode active material, and carbon nanotube(CNT) was used as the conductive material. The positive electrode slurry was coated onto an aluminum current collector sheet, dried, and then rolled to manufacture a positive electrode.

A negative electrode active material: a conductive material: a binder were mixed at a weight ratio of 96:1:3 in water to prepare a negative electrode slurry. At this time, graphite was used as the negative electrode active material, a carbon black was used as a conductive material, and SBR and CMC were used at a weight ratio of 2:1 as the binder. The negative electrode slurry was coated onto a copper current collector sheet, dried, and then rolled to manufacture a negative electrode (loading: 7.5 mg/cm²).

At this time, the ratio (N/P ratio) of a discharge capacity per unit area of the negative electrode to a discharge capacity per unit area of the positive electrode was set to 1.10.

A separator was interposed between the positive electrode and the negative electrode manufactured as above to produce an electrode assembly, and the electrode assembly was inserted into a battery case, and then an electrolyte was injected, thereby manufacturing a battery cell.

### (Activating step)

The battery cells were pre-aged for 2 days, then charged to SOC 3 at 0.2C and constant current mode at 45°C (first charge stage), charged to SOC 60 at 0.3C and constant current mode, and then charged to 0.05C at a constant voltage (second charging stage), and then discharged to 2.0V with a constant current of 0.5C. In this manner, an activating step was performed to manufacture a lithium secondary battery.

### Example 2

The battery cell manufactured as in Example 1 was pre-aged for 2 days, then charged to SOC 60 in constant current mode at 0.3C at 45°C, and then charged to 0.05C at constant voltage (second charging step), and discharged to 2.0V with a constant current of 0.5C. In this manner, an activating step was performed to manufacture a lithium secondary battery.

### Comparative Example 1

### (Manufacture of battery cells)

A positive electrode active material: a conductive material: a PVDF binder were mixed at a weight ratio of 97 : 1 : 2 in N-methylpyrrolidone to prepare a positive electrode slurry. At this time, Li_{1.16}Ni_{0.31}Mn_{0.53}O₂ was used as the positive electrode active material, and carbon nanotube(CNT) was used as the conductive material. The positive electrode slurry was coated onto an aluminum current collector sheet, dried, and then rolled to manufacture a positive electrode.

A negative electrode active material: a conductive material: a binder were mixed at a weight ratio of 96:1:3 in water to prepare a negative electrode slurry. At this time, graphite was used as the negative electrode active material, a carbon black was used as a conductive material, and SBR and CMC were used at a weight ratio of 2:1 as the binder. The negative electrode slurry was coated onto a copper current collector sheet, dried, and then rolled to manufacture a negative electrode (loading: 13.0 mg/cm²).

At this time, the ratio (N/P ratio) of a discharge capacity per unit area of the negative electrode to a discharge capacity per unit area of the positive electrode was set to 1.49.

A separator was interposed between the positive electrode and the negative electrode manufactured as above to produce an electrode assembly, and the electrode assembly was inserted into a battery case, and then an electrolyte was injected, thereby manufacturing a battery cell.

### (Activating step)

The battery cells were pre-aged for 2 days, then charged to SOC 3 at 0.2C and constant current mode at 45°C (first charge stage), charged to SOC 60 at 0.3C and constant current mode, and then charged to 0.05C at a constant voltage (second charging stage), and then discharged to 2.0V with a constant current of 0.5C. In this manner, an activating step was performed to manufacture a lithium secondary battery.

### Experimental Example 1

Charge/discharge was performed once in which the battery cells manufactured in Examples 1 to 2 and Comparative Example 1 were respectively charged to 4.3V in 0.33C constant current-constant voltage mode (0.05C cut-off), and discharged to 2.0V at a constant current of 0.33C, at room temperature (25°C), and the initial charge/discharge capacity was measured, and shown in Table 1 below.

**[Table 1]**

| | Initial charge capacity (mAh) | Initial discharge capacity (mAh) |
|---|---|---|
| Example 1 | 930 | 920 |
| Example 2 | 930 | 915 |
| Comparative Example 1 | 930 | 920 |

Looking at Table 1, it can be seen that in the case of the lithium secondary batteries of Examples 1 and 2 manufactured according to the present invention, even though the negative electrode was not excessively designed, an initial charge/discharge capacity comparable to that of the lithium secondary battery of Comparative Example 1 was obtained.

### Experimental Example 2. (Request for provision of storage characteristics or cycle characteristics)

Charge/discharge was performed 200 times in which the battery cells manufactured in Examples 1 and 2 and Comparative Example 1 were respectively charged to 4.3V at 45°C in 0.33C constant current-constant voltage mode (0.05C cut-off), and discharged to 2.0V at a constant current of 0.33C. The ratio of the 200-time discharge capacity to the initial discharge capacity was shown as the cycle capacity retention rate in Table 2 below.

**In** addition, the battery cells of Examples 1 and 2 and Comparative Example 1 were respectively charged to 4.3V at 25°C in 0.33C constant current-constant voltage mode (0.05C cut-off), and then discharged to 2.0V at a constant current of 0.33C to measure the initial discharge capacity, and charged again to 4.3V at 25°C in 0.33C constant current-constant voltage mode (0.05C cut-off), stored in a chamber at 60°C for 8 weeks, then discharged to 2.0V at a constant current of 0.33C. The ratio of the discharge capacity after storage to the discharge capacity before storage was measured, and the results were shown as the storage capacity retention rate in Table 2 below.

**[Table 2]**

| | Cycle capacity retention rate (%) | Storage capacity retention rate (%) |
|---|---|---|
| Example 1 | 91.5 | 86.1 |
| Example 2 | 91.3 | 86.1 |
| Comparative Example 1 | 90.9 | 85.8 |

Looking at Table 2, it can be confirmed that in the case of the lithium secondary batteries of Examples 1 and 2 manufactured according to the present invention, even though the negative electrode was not excessively designed, it exhibited a capacity retention rate and high-temperature storage characteristics comparable to those of the lithium secondary battery of Comparative Example 1, and was rather superior. It is understood that this is because the lithium secondary battery of Comparative Example 1 had an increase in side reactions to excessive design of the negative electrode.

### [Industrial Applicability]

The method for manufacturing a lithium secondary battery according to the present invention can complete charging at SOC 60 to SOC 65 in the activating step, thereby improving the excessive design of the negative electrode and solving the problem of increasing the volume and weight of the lithium secondary battery.

## Claims

1. A method for manufacturing a lithium secondary battery, the method comprising the steps of:
preparing a battery cell including a positive electrode, a negative electrode and an electrolyte, wherein the positive electrode includes a lithium-rich manganese-based oxide having a content of manganese greater than 50 mol% compared to a total content of metals excluding lithium in the lithium-rich manganese-based oxide, and a ratio of a number of moles of lithium to a number of moles of all metals excluding lithium (Li/Me) is greater than 1; and
charging and discharging the battery cell at least once or more to activate the battery,
wherein the battery cell has a ratio (N/P ratio) of a discharge capacity per unit area of the negative electrode to a discharge capacity per unit area of the positive electrode of 1.05 to 1.15, when charging at 2.0V to 4.3V, and
wherein in the activating step, the charging is performed from SOC 60 to SOC 65.

2. The method for manufacturing a lithium secondary battery according to claim 1, wherein:
the lithium-rich manganese-based oxide is represented by the following Chemical Formula 1.
[Chemical Formula 1] LiₐNi_{b}Co_{c}Mn_{d}MₑO₂
wherein, in Chemical Formula 1, 1 < a, 0≤b≤0.5, 0≤c≤0.1, 0.5≤d<1.0, 0≤e≤0, and M is at least one selected from the group consisting of Al, B, Co, W, Mg, V, Ti, Zn, Ga, In, Ru, Nb, Sn, Sr and Zr.

3. The method for manufacturing a lithium secondary battery according to claim 2, wherein:
in Chemical Formula 1, 1.1≤a≤1.5, 0.1≤b≤0.4, 0≤c≤0.05, 0.5≤d≤0.80, 0≤e≤0.1.

4. The method for manufacturing a lithium secondary battery according to claim 1, wherein:
the charging step is performed in constant current mode (CC mode) or constant current-constant voltage mode (CCCV mode).

5. The method for manufacturing a lithium secondary battery according to claim 1, wherein:
the charging step is performed from SOC 60 to SOC 65 at a rate of 0.3C to 1.0C.

6. The method for manufacturing a lithium secondary battery according to claim 1, wherein:
the charging step includes a first charging step of charging at a rate of 0.1C to 0.3C in the range of SOC 0 ~ SOC 5, and a second charging step of charging from SOC 60 to SOC 65 at a rate of 0.3C to 1.0 C after the first charging step.

7. The method for manufacturing a lithium secondary battery according to claim 6, wherein:
the charging step is performed in constant current mode (CC mode).

8. The method for manufacturing a lithium secondary battery according to claim 6, wherein:
the activating step includes discharging at a C-rate of 0.3C to 0.7C until reaching 2.0V.
